# EUROPEAN PATENT APPLICATION

(11) **EP 4 703 227 A1**
(43) Date of publication of application: **04.03.2026**
(21) Application number: 24197128.2
(22) Date of filing: 29.08.2024
(51) Int. Cl.: B60W 50/14, B60W 30/18

(54) **ADAPTIVE CROSSING SITUATION DRIVING ASSISTANCE METHOD AND SYSTEM**

(71) Applicant: Robert Bosch GmbH, 70442 Stuttgart (DE)
(72) Inventor: Marki, Mark, Budapest (HU); Wirnhardt, Balint, Budapest (HU); Hegedus, David, Budapest (HU); Ficsor, Andras, Budapest (HU); Goga, Andrea, Budapest (HU); Fabo, Marko Kristof, Budapest (HU)

(57) **Abstract**

An adaptive driving assistance method (100) and system, the method comprising: providing (110) a plurality of crossing scenarios (10) that describing turning and/or crossing maneuvers (12) performed in response to respective control interventions of a driver; generating (120) a driving style model (20) based on the plurality of crossing scenarios (10); estimating (130) a crossing time (30) for an upcoming crossing scenario, based on the driving style model (20); analyzing (140) the estimated crossing time (30), comprising: obtaining (150) at least one potential target object parameter (50) of a potential target object (300) crossing the vehicle (200), the potential target object parameter (50) being associated to a motion state of the potential target object (300), and generating (160) a driver feedback signal (60), based on the estimated crossing time (30) and the at least one potential target object parameter (50).

## Description

### Field of the invention

The invention relates to an adaptive driving assistance method and an adaptive driving assistance system for a vehicle.

### Background

Driver assistance systems in modern vehicles play a crucial role in enhancing road safety. For example, driver assistance systems may automatically control vehicle proximity and warn of imminent collisions. Automatic Emergency Braking systems assist the driver in avoiding or mitigating the effects of accidents. Radar-based systems can detect objects and vehicles in the vehicle's path, providing real-time data to enhance the effectiveness of braking interventions.

### Prior art

DE 10 2005 020 429 A1 describes a method of supporting a driver when crossing an intersection, the method comprising dividing the crossing into many zones arranged on the street and determining the navigability of each zone on the basis of situation-dependent condition values obtained from surrounding information. On the basis of this, a vehicle movement for crossing the intersection is estimated.

DE 10 2013 221 499 A1 describes an intersection assistant for assisting a driver of a motor vehicle when turning the motor vehicle from a first road into a second road, including a device for monitoring and analyzing the surroundings. The assistant includes an acceleration assistant which, after a turning maneuver of the motor vehicle, initiates an acceleration of the motor vehicle to reduce the risk of a rear-end collision if it is determined that a following vehicle is at risk of colliding with the motor vehicle.

### Disclosure of the invention

It is an object of the invention to provide a novel method and system for assisting a driver of a vehicle in safety critical crossing situations.

The object is solved by the subject-matter of the independent claims. Further embodiments are indicated below and in the dependent claims.

The aspects of the invention disclosed herein may be implemented with any one or more of the features described in the following.

The core idea of the invention is that a driver feedback signal is generated based on an estimated crossing time for an upcoming crossing scenario of the vehicle and based on a motion state of a potential target object that is about to cross the pathway of the vehicle, the crossing time being estimated based on a driving style model that reflects previous turning and/or crossing maneuvers of the driver.

According to one aspect of the invention, there is provided an adaptive driving assistance method. The method may be an adaptive crossing assistance method. The method comprises a steps of providing a plurality of crossing scenarios. The crossing scenarios may describe turning and/or crossing maneuvers performed in response to respective control interventions of a driver of a vehicle. The method further comprises generating a driving style model based on the plurality of crossing scenarios. The driving style model may be associated to the driver. Thus, a driving style model may be acquired. Based on the driving style model, In a situation of an upcoming crossing scenario of the vehicle, the method comprises estimating a crossing time for the upcoming crossing scenario. The crossing time is estimated based on the driving style model. The method further comprises analyzing the estimated crossing time of the upcoming crossing scenario. The step of analyzing may comprise: obtaining at least one potential target object parameter of a potential target object crossing the vehicle, the potential target object parameter being associated to a motion state of the potential target object; and generating a driver feedback signal, based on the estimated crossing time and the at least one potential target object parameter.

Drivers approach crossroads in diverse ways, and it is often difficult for them to calculate if they can initiate the crossing without causing an incident. This is caused by the difficulty in determining the velocity and distance of an approaching vehicle. The method has the advantage that a driver feedback signal for the upcoming crossing scenario is based on the upcoming crossing scenario of the vehicle and the driving style model, which reflects the driving style of the driver when driving the car. The method may effectively inform the driver whether they can safely initiate the crossing, based on prior knowledge on similar crossing situations of the driver.

The solution thus comprises three main parts: initial analysis of driving style, calculating the required crossing time, and analyzing the traffic situation.

The driving style model may be adapted to the habits of the driver based on a plurality of previous crossing scenarios initiated by the driver. The driving style model may be generated based on a plurality of crossing scenarios, the crossing scenarios comprising turning and/or crossing maneuvers in response to respective control interventions of the driver of the vehicle.

Providing a plurality of crossing scenarios may include capturing and/or recording a plurality of crossing scenarios.

The driving style model may be configured to identify the driving style of a driver. In other words, the driving style model may be configured to distinguish the driving style of a slow, normal and fast driver based on the driving scenarios. For example, the driving style model may distinguish different driving styles based on the crossing maneuvers, ego parameters and ambient parameters. Generating the driving style model may comprise adapting the driving style model.

The step of estimating a crossing time may include considering how the driver usually behaves in a crossing and calculating the expected time that is needed for crossing the road. The method may allow to give profile-based feedback on whether the driver should initiate a drive through.

The driver feedback signal may be a graduated driver feedback signal. It may be adapted to selectively signalize situations where a crossing is safe, situations where a crossing is mildly dangerous (thus requiring faster driving), and situations where a crossing is dangerous. A scaled (graduated) feedback (e.g., green - yellow - red light) for the driver may be output to differentiate situations that are safe or where raised attention is required.

In embodiments, the crossing scenarios comprise at least one of: ego parameters, each of the ego parameters being associated to a respective vehicle state; and ambient parameters, each of the ambient parameters being associated to a respective static environment state.

The ego parameters may be associated to vehicle-related parameters, in other words, habits of the driver that may change continuously in response to a control intervention or activity of a driver. The ambient parameters may be ambient parameters from the crossing scenarios. The ambient parameters may be associated to static environment-related parameters. The ambient parameters may be related to the environment of the vehicle, independent from the habits of the driver. Thus, the driving style model may be generated dependent on vehicle-related parameters, in particular habits of the driver, and non-vehicle static environment-related parameters.

The upcoming crossing scenario may include an upcoming pathway of the vehicle. The upcoming crossing scenario may include parameters, including at least one of: location information, velocity of static and/or dynamic objects, lane information, and/or a planned route and/or GPS information. The method may include: obtaining said parameters of the upcoming crossing scenario. The crossing time for an actual/upcoming crossing maneuver of the vehicle may be estimated based on the driving style model and the upcoming crossing scenario or upcoming pathway of the vehicle. In other words, the crossing time of the upcoming crossing scenario or upcoming pathway of the vehicle may be estimated with respect to the driving style model. The estimated crossing time for the upcoming crossing scenario may be analyzed in relation to the potential target object crossing the vehicle. The step of obtaining the at least one potential target object parameter of the potential target object crossing the vehicle may be include obtaining a motion state of the potential target object. The motion state of the potential target object may be associated to a distance or a crossing time with respect to the (own or ego) vehicle crossing the potential target object. The generated driver feedback signal may be based on the estimated crossing time and the potential target object parameter. In other words, the feedback signal may be based on the estimated crossing time of the upcoming pathway of the vehicle in the upcoming crossing scenario, and on the crossing time with respect to the potential target object.

In embodiments, the step of estimating the crossing time is further based on at least one actual (that is, current) ego parameter and/or on at least one actual ambient parameter. The at least one actual ego parameter may be associated or related to a respective vehicle state while the pathway in the crossing scenarios is/was traversed. The at least one actual ambient parameter may be associated or related to a respective static environment state while the pathway in the crossing scenarios is/was traversed.

The initial analysis of driving style is the basis for calculating the potential time needed to carry out the maneuver. For the analysis of the driving style, crossing and turning scenarios are identified, and the time it takes for the driver to execute a maneuver may be the main parameter for defining the driving style or generating the driving style model. This can either be done by machine learning algorithms or simple parameter fitting. The crossing time calculation may take multiple things into account: habits, driving style of the driver; the ego state; and/or the static environment (road, lanes, weather, etc.). The ego state and the information on the environment may be used as the input for the driving style model that may output estimated crossing time, depending on a turning trajectory.

The crossing scenarios may include trajectory-time pairs, associating a time (crossing time) to a respective trajectory. Through obtaining the data in the providing step, maneuver - time pairs are available. The trajectory of a maneuver may be extracted, and its relation to the time may be be calculated. In embodiments, the step of generating the driving style model may comprise a step of extracting crossing trajectories from the crossing scenarios. The crossing trajectories may be associated to a path traversed during a respective maneuver. The step of generating the driving style model may comprise a step of extracting crossing times from the crossing scenarios. The crossing times may be associated to a time period in which the path is or was traversed during the respective maneuver. The step of generating the driving style model may comprise a step of parameterizing the extracted crossing trajectories. The step of generating the driving style model may comprise a step of fitting the extracted crossing times to the respective parameterized crossing trajectory. In other words, the crossing trajectories may be mapped to the crossing times, or the other way round. The step of fitting the extracted crossing times may comprise a fitting of the crossing times to the respective ego parameter(s) and/or the ambient parameter(s). In other words, the crossing times may be mapped to the ego parameters and/or the ambient parameters, or the other way round. Furthermore, the crossing times may be mapped to the parameterized crossing trajectories, the respective ego parameters and the ambient parameters, or the other way round. The step of parameterizing and/or fitting may be based on analytical methods and/or a machine learning algorithm. The parametrization of the crossing trajectories may be carried out by polynomial expression or other analytical methods. The trajectory itself may be parametrized in one of multiple ways (e.g. with a polynomial expression), and, thus, the time it takes for the driver to execute a maneuver may be fitted to the specific parameters of the trajectory, for example.

In embodiments, the ego parameters comprise at least one of the following parameters: current speed, break and/or handbrake status, blinker status, gear shift status, and yaw rate of the vehicle. The list is not intended to be exhaustive.

In embodiments, the ambient parameters comprise parameters related to at least one of the following: road information, lane information, highway information, intersection information, driveways information, traffic signs, and weather information. The list is not intended to be exhaustive.

According to a further aspect of the invention, there is provided an adaptive driving assistance system for a vehicle. The system may be an adaptive crossing assistance system. The system comprises a capturing unit configured for capturing crossing scenarios of a vehicle, the crossing scenarios describing turning and/or crossing maneuvers performed in response to respective control interventions of a driver of the vehicle. The system comprises a sensor unit configured for obtaining at least one potential target object parameter of a potential target object crossing the vehicle, the potential target object parameter being associated to a motion state of the potential target object. The system comprises a computational unit configured for carrying out the adaptive driving assistance method as described herein. The system comprises a warning device configured to output the generated driver feedback signal to the driver.

In embodiments, the capturing unit comprises a sensor unit and/or a navigation system. The sensor unit and/or the navigation system may be configured for acquiring at least one of a pathway of the vehicle, ego parameters of the vehicle and ambient parameters. The sensor unit and/or a navigation system may be configured for using real-time traffic data. The capturing unit may be configured to capture crossing scenarios of the vehicle based on data obtained from a radar-based front-cross traffic assistance system of the vehicle.

The sensor unit that is configured for obtaining at least one potential target object parameter may be configured for acquiring a location and/or velocity of static and/or dynamic objects, lane information and/or GPS information.

In embodiments, the sensor unit for acquiring potential target object-related parameters may be a part of a radar-based front-cross traffic assistance system of the vehicle.

In embodiments, the sensor unit for obtaining at least one potential target object parameter comprises at least one of a radar sensor, a camera, and/or a LiDAR sensor. The radar sensor, camera and/or LiDAR sensor may be configured for obtaining a motion state, in other words, a velocity and/or distance of the potential target object. The sensor unit for obtaining at least one potential target object parameter may comprise at least one of a radar-based front corner sensor, a radar-based back corner sensor. The sensor may be part of a front and/or back corner radar system of the vehicle. The sensor unit may be an available radar system of the vehicle.

In embodiments, the generating feedback signal comprises a visual and/or auditory signal. The warning device may be configured to output the generating driver feedback signal as a visual and/or auditory signal. The warning device may comprise a display. The adaptive crossing assistance system may be configured for using a board instrument of the vehicle as a warning device to output the generating driver feedback signal. The warning device may comprise audio speakers. The adaptive crossing assistance system may be configured using audio speakers of the vehicle as a warning device to output the generating scaled feedback signal.

In embodiments, the warning device is configured to output the visual signal selectively in the form of green, yellow, and red visual signals. The warning device may comprise visual alerts categorized into green, yellow, and red lights to output the generating graduated feedback signal. The lights may represent a safety indicator when initiating the crossing maneuver, based on the distance and/or speed of the potential target object. In other words, the lights may represent a safety indicator depending on the crossing time of a potential target object and the driving style model of the driver.

In a green situation, the potential target object's distance may be suitable for initiating the crossing maneuver. In other words, for both of driving style models of a usually slowly driving driver and a usually fast driving driver, the crossing time of the potential target object is suitable for initiating the crossing maneuver.

In a yellow situation, initiating the crossing maneuver may be dependent on the driving style of the driver, in other words, the habits of the driver. For the driving style model of a usually slowly driving driver, the yellow situation may indicate a dangerous situation, where the driver should consider waiting instead of crossing. For the driving style model of a usually fast driving driver, the yellow situation may indicate a mildly dangerous situation but still suitable to safely cross before the potential target object.

For the driving style model of a usually normal driving driver, a red situation may indicate a dangerous situation. For a fast driver, the red situation may indicate a mildly dangerous situation.

Preferred embodiments of the invention will now be described in conjunction with the drawings, in which:
- Fig. 1: is a schematic illustration of an embodiment of the adaptive driving assistance method for a vehicle;
- Fig. 2: is a schematic illustration of three different crossing situations; and
- Fig. 3: is a schematic illustration of an embodiment of an adaptive crossing assistance system for a vehicle using the adaptive driving assistance method.

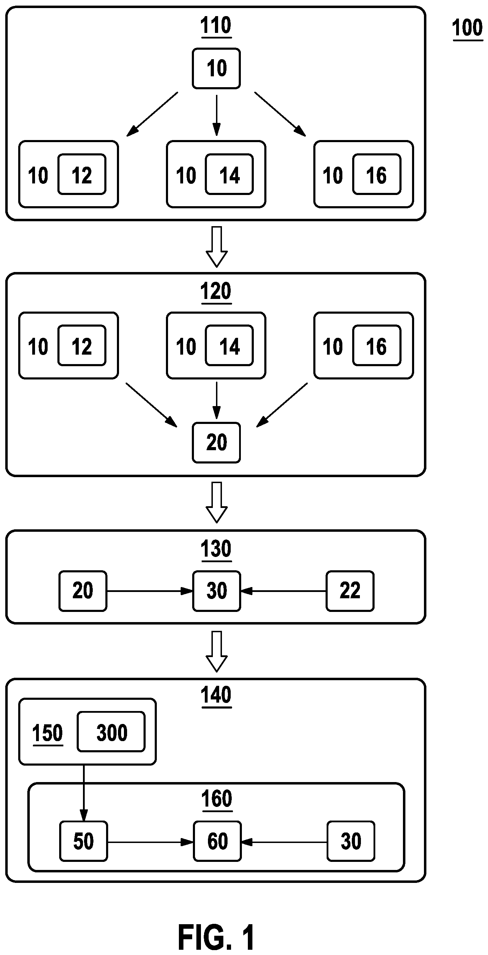

Fig. 1 schematically shows an adaptive driving assistance method 100 for a vehicle 200. In step 110, a plurality of crossing scenarios 10 are provided. The crossing scenarios 10 comprise turning and/or crossing maneuvers 12 in response to respective control interventions of a driver of the vehicle 200. Furthermore, the crossing scenarios 10 comprise ego parameters 14. Each of the ego parameters 14 is associated to a respective vehicle state. Each ego parameter 14 is one of the parameters: current speed, break and/or handbrake status, blinker status, gear shift status and yaw rate of the vehicle 200. Furthermore, the crossing scenarios 10 comprise ambient parameters 16. Each of the ambient parameters 16 is associated to a respective static environment state. Each of the ambient parameters 16 is information about one of: road, lanes, highways, intersections, driveways, traffic signs, light signaling systems and weather.

In step 120, a driving style model 20 is generated from analyzing the plurality of crossing scenarios 10. The driving style model 20 is associated to a driving style of the driver. The crossing scenarios 10 include pairs of crossing trajectory and crossing time. The crossing trajectories are associated to a path that is traversed during a respective maneuver. The crossing times are associated to a time period in which the path is traversed during the respective maneuver. The crossing trajectories and the crossing times are extracted from the crossing scenarios 10. The crossing trajectories are parameterized. The crossing times are fitted to (the parameters of) the crossing trajectories. The crossing times are mapped to the crossing trajectories, the ego parameters and the ambient parameters to estimate the driving style model 20.

In step 130, a crossing time 30 for an upcoming crossing scenario is estimated. The crossing time 30 is estimated based on an upcoming pathway 22 of the upcoming crossing scenario of the vehicle 200 and based on the driving style model 20.

In step 140, the crossing time 30 of the upcoming crossing scenario is analyzed. The step 140 comprises step 150. In step 150, at least one potential target object parameter 50 of a potential target object 300 crossing the vehicle 200 is obtained. The potential target object parameter 50 is associated to the motion state of the potential target object 300. The step 140 further comprises step 160. In step 160, a scaled feedback signal 60 is generated. The scaled feedback signal 60 is based on the crossing time 30 and the potential target object parameter 50.

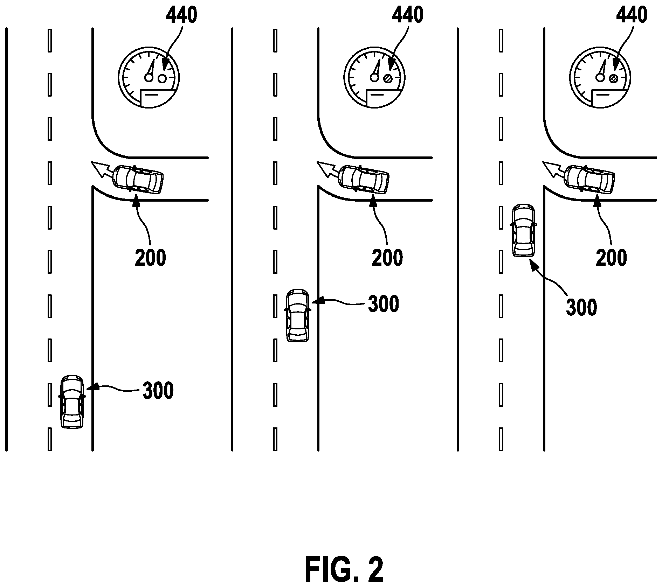

Fig. 2 shows three different crossing situations of the vehicle 200, while a potential target object 300 is approaching, and respective warning lights of a warning device 440 included in the vehicle 200. The left part of Fig. 2 shows a safe situation where the light is green. The middle part shows a mildly dangerous situation where the light is yellow. The right part shows a dangerous situation where the light is red.

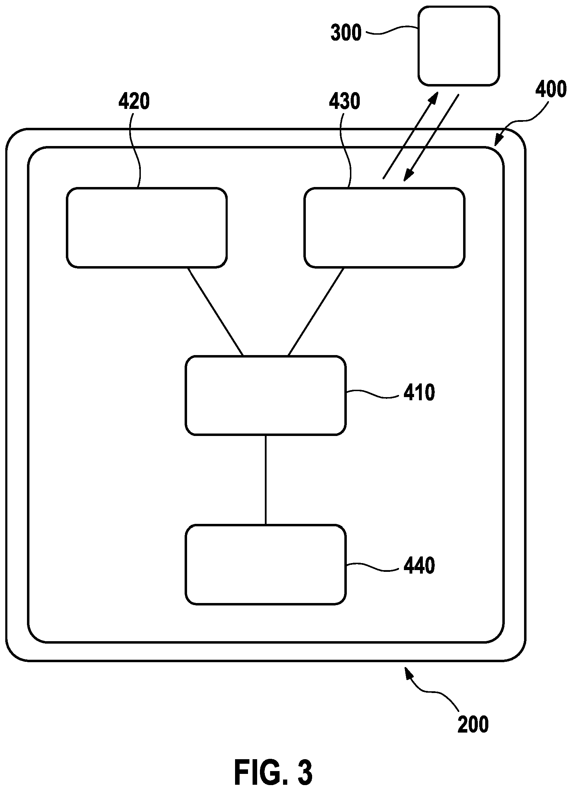

Fig. 3 schematically shows an embodiment of an adaptive crossing assistance system 400 for the vehicle 200 that implements the adaptive driving assistance method 100.

The adaptive crossing assistance system 400 comprises a computational unit 410. The computational unit 410 is configured for carrying out the adaptive driving assistance method 100. Further, the adaptive crossing assistance system 400 comprises a sensor unit and/or navigation system 420. The sensor unit and/or a navigation system 420 is configured for acquiring the pathway of the crossing scenarios 10 of the vehicle 200, ego parameters 14 of the vehicle, and ambient parameters 16. The sensor unit and/or navigation system 420 may be a part of a radar-based front-cross traffic assistance system of the vehicle 200. Furthermore, the adaptive crossing assistance system 400 comprises a sensor unit 430. The sensor unit 430 is configured for obtaining the potential target object parameters 50 of the potential target object 300 crossing the vehicle 200. The adaptive crossing assistance system 400 comprises a warning device 440. The warning device 440 is configured to output the generated scaled feedback signal 60 to the driver. The warning device 440 is configured to output the generating scaled feedback signal 60 as a visual and/or auditory signal.

## Claims

1. An adaptive driving assistance method (100), the method comprising the steps of:
providing (110) a plurality of crossing scenarios (10), the crossing scenarios (10) describing turning and/or crossing maneuvers (12) performed in response to respective control interventions of a driver of a vehicle (200);
generating (120) a driving style model (20) based on the plurality of crossing scenarios (10);
estimating (130) a crossing time (30) for an upcoming crossing scenario of the vehicle (200), wherein the crossing time (30) is estimated based on the driving style model (20);
analyzing (140) the estimated crossing time (30) of the upcoming crossing scenario, the step of analyzing (140) comprising:
- obtaining (150) at least one potential target object parameter (50) of a potential target object (300) crossing the vehicle (200), the potential target object parameter (50) being associated to a motion state of the potential target object (300); and
- generating (160) a driver feedback signal (60), based on the estimated crossing time (30) and the at least one potential target object parameter (50).

2. The method (400) according to claim 1, wherein the crossing scenarios (10) comprise at least one of:
ego parameters (14), each of the ego parameters (14) being associated to a respective vehicle state;
ambient parameters (16), each of the ambient parameters (16) being associated to a respective static environment state.

3. The method (400) according to claim 1 or 2, wherein in the step of estimating (130) the crossing time (30), the estimation of the crossing time (30) is further based on at least one actual ego parameter (14) and/or on at least one actual ambient parameter (16).

4. The method (400) according to any one of the preceding claims, wherein the ego parameters (14) comprise at least one of the following parameters: current speed, break and/or handbrake status, blinker status, gear shift status, and yaw rate of the vehicle.

5. The method (400) according to any one of the preceding claims, wherein the ambient parameters (16) comprise parameters related to at least one of the following: road information, lane information, highway information, intersection information, driveways information, traffic signs, and weather information.

6. An adaptive driving assistance system (400) for a vehicle (200), the system comprising:
a capturing unit configured for capturing crossing scenarios (10) of a vehicle (200), the crossing scenarios (10) describing turning and/or crossing maneuvers (12) performed in response to respective control interventions of a driver of the vehicle (200);
a sensor unit (430) configured for obtaining at least one potential target object parameter (50) of a potential target object (300) crossing the vehicle (200), the potential target object parameter (50) being associated to a motion state of the potential target object (300);
a computational unit (410) configured for carrying out the adaptive driving assistance method according to any one of claims 1 to 4; and
a warning device (440) configured to output the generated driver feedback signal (60) to the driver.

7. The system of claim 6, wherein the capturing unit comprises a sensor unit and/or a navigation system (420), configured for acquiring at least one of a pathway of the vehicle (200), ego parameters (14) of the vehicle and ambient parameters (16).

8. The system according to claim 6 or 7, wherein the sensor unit (430) configured for obtaining at least one potential target object parameter comprises at least one of a radar sensor, a camera, and/or a LiDAR sensor.

9. The system according to any one of the preceding claims 6 to 8, wherein the generated driver feedback signal (60) comprises a visual and/or auditory signal.

10. The system according to claim 9, wherein the warning device (440) is configured to output the visual signal selectively in the form of green, yellow, and red visual signals.
